# EUROPÄISCHE PATENTSCHRIFT

(11) **EP 2 258 645 B1**
(45) Veröffentlichungstag und Bekanntmachung des Hinweises auf die Patenterteilung: **13.05.2015**
(21) Anmeldenummer: 10003931.2
(22) Anmeldetag: 14.04.2010
(51) Int. Cl.: B65H 29/00, B65H 39/055, B65H 39/115, B65G 29/00

(54) **Vorrichtung und Verfahren zum Verarbeiten von Druckereiprodukten**
Apparatus and process for processing printing products
Dipsositif et procédé pour le traitement de produits d'impression

(30) Priorität: 03.06.2009 CH 8492009
(43) Veröffentlichungstag der Anmeldung: 08.12.2010
(73) Patentinhaber: Ferag AG, 8340 Hinwil (CH)
(72) Erfinder: Stauber, Hans-Ulrich, 8624 Grüt (CH); Ramseier, Marcel, 8623 Wetzikon (CH)
(74) Vertreter: Schaad, Balass, Menzl & Partner AG

(56) Entgegenhaltungen:
- EP-A- 1 302 418
- CH-A5- 644 816
- US-A- 4 723 770

## Beschreibung

Die vorliegende Erfindung betrifft eine Vorrichtung und ein Verfahren zum Verarbeiten von Druckereiprodukten mit den Merkmalen des Oberbegriffs des Patentanspruchs 1 beziehungsweise 16.

Eine derartige Vorrichtung ist beispielsweise aus dem Dokument CH 644 816 bekannt. Sie weist eine zellenradartige Verarbeitungseinrichtung nach aussen offenen, radialen Aufnahmeelementen auf. Im Zuge des Drehens der Aufnahmeelemente um die horizontale Drehachse werden in diesen angeordnete Druckereiprodukte zu einem Entnahmeförderer transportiert. Dieser weist eine Anzahl an einem Zugorgan im Abstand hintereinander angeordnete Greiferzangen auf, wobei das Zugorgan um ein zur Drehachse parallelachsiges Umlenkrad geführt ist. Im Zuge Ihrer Umlenkung um das Umlenkrad greift jeweils eine Greiferzange in ein Aufnahmeelement hinein und erfasst das in diesem angeordnete Druckereiprodukt bei einer bezüglich der Drehachse radial aussen liegenden Seitenkante. Die so erfassten Druckereiprodukte werden mittels des Entnahmeförderers von der Verarbeitungseinrichtung wegtransportiert.

Eine weitere ähnliche Vorrichtung ist aus dem Dokument CH 669 944 bekannt. Hier weist die Verarbeitungseinrichtung ebenfalls eine Anzahl hintereinander und quer zur Umlaufbahn angeordnete Aufnahmeelemente auf, wobei letztere an Antriebsorganen in Form von Ketten befestigt sind und die Ketten am Stromaufwärts und am Stromabwärts liegenden Ende der Verarbeitungseinrichtung um horizontale Achsen geführt sind.

Aus den Dokumenten US 4 723 770 A und EP 1 302 418 A1 sind Vorrichtungen zum Verarbeiten von Druckereiprodukten bekannt, die eine Verarbeitungseinrichtung mit in Umlaufrichtung angetriebenen Aufnahmeelementen und einen Entnahmeförderer mit entgegen der Umlaufrichtung angetriebenen Greiferzangen aufweisen.

Es ist eine Aufgabe der vorliegenden Erfindung, eine gattungsgemässe Vorrichtung zu schaffen und ein vorbekanntes Verfahren weiterzubilden, welche es erlauben, bei hoher Verarbeitungskapazität, die Druckereiprodukte unterschiedlich gehalten von der Verarbeitungseinrichtung wegzufördern.

Diese Aufgabe wird mit einer Vorrichtung beziehungsweise einem Verfahren gelöst, welche die Merkmale des Patentanspruchs 1 beziehungsweise welches die Merkmale des Patentanspruchs 16 aufweist.

Während bei den bekannten Vorrichtungen und Verfahren die Druckereiprodukte an jener Seitenkante gehalten, wegtransportiert werden, welche bezüglich der Drehachse radial aussen liegend ist, erlaubt die erfindungsgemässe Vorrichtung und das erfindungsgemässe Verfahren die Druckereiprodukte beim Rand gehalten wegzufördern, welcher der seitenkante gegenüber liegt und in den Aufnahmeelementen der Drehachse zugewandt ist.

Dies ist insbesondere vorteilhaft, wenn für die Weiterverarbeitung die Seitenkante frei zugänglich sein sollte. Beispielsweise sind vielmals gefaltete Druckereiprodukte mit ihrem Falz radial innen liegend in den Aufnahmeelementen angeordnet. Sie werden dann mittels Greiferzangen eines Entnahmeförderers bei dem dem Falz gegenüberliegenden Rand, der sogenannten Blume, erfasst und aus den Aufnahmeelementen heraus bewegt. Bei der erfindungsgemässsen Vorrichtung werden dann die Druckereiprodukte von Klammern eines Klammertränsporteurs beim Falz erfasst und von der Verarbeitungseinrichtung wegtransportiert, sodass dann die Blume frei zugänglich ist.

In einer besonders bevorzugten Ausführungsform der erfindungsgemässen Vorrichtung wird zur Verarbeitung von Druckereiprodukten unterschiedlichen Formats - d.h. mit einem unterschiedlichen Abstand zwischen der Seitenkante und dem dieser gegenüberliegenden Rand - der Übernahmeabschnitt des Entnahmeförderers in einer wenigstens annähernd radial zur Drehachse der Verarbeitungseinrichtung verlaufenden Richtung verschoben. In bevorzugterweise bleibt dabei die Lage des Klammertransporteurs ortsfest.

In einer weiteren besonders bevorzugten Ausführungsform der erfindungsgemässen Vorrichtung ist die nachlaufende Wand jedes Aufnahmeelements radial aussen mit einem Führungselement versehen, um das betreffende von einer Greiferzange erfasste und mittels dieser aus dem Aufnahmeelement heraus bewegte Druckereiprodukt im frei liegenden Bereich zu stützen, so dass dessen Rand auf einfache Art und Weise zum Erfassen mittels einer Klammer eine definierte Lage einnimmt.

Weitere bevorzugte Ausführungsformen der erfindungsgemässen Vorrichtung und des erfindungsgemässen Verfahrens sind in den weiteren abhängigen Patentansprüchen angegeben.

Die Erfindung wird anhand von zwei in der Zeichnung dargestellten Ausführungsbeispielen näher beschrieben. Es zeigen rein schematisch:
- Fig. 1: In Ansicht einen Teil einer erfindungsgemässen Vorrichtung mit einer zellenradartig ausgebildeten Verarbeitungseinrichtung, beim Verarbeiten von kleinformatigen Druckereiprodukten;
- Fig. 2: In gleicher Darstellung wie Fig. 1 die dort gezeigte Vorrichtung beim Verarbeiten von grossformatigen Druckereiprodukten; und
- Fig. 3: ebenfalls in Ansicht eine erfindungsgemässe Vorrichtung mit einer als Rundlauf ausgebildeten Verarbeitungseinrichtung.

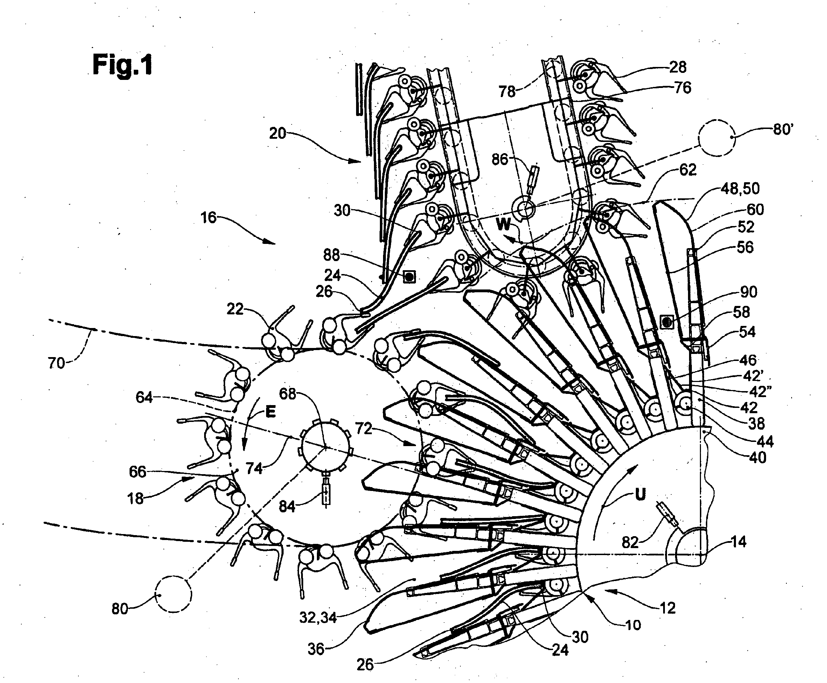

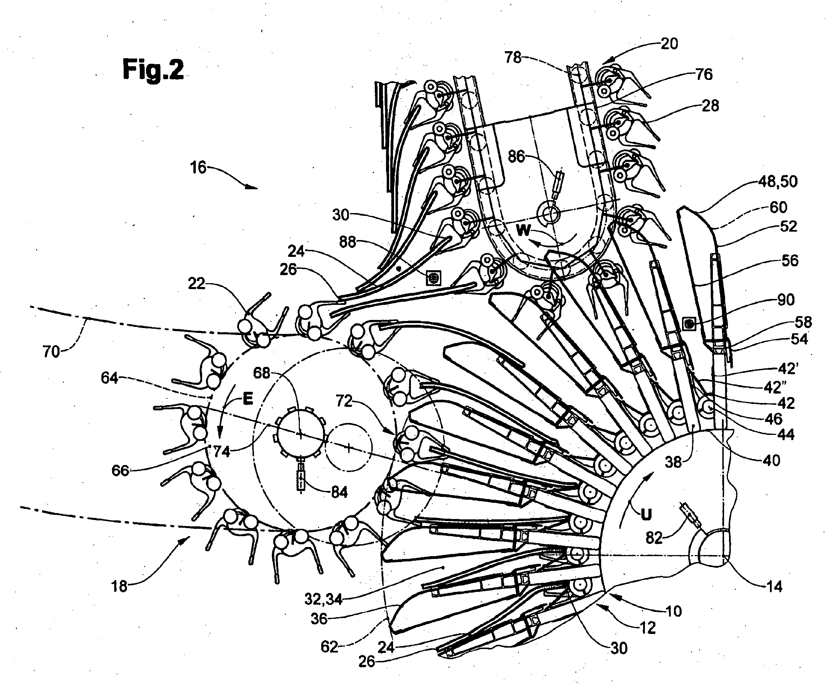

Die in den Fig. 1 und 2 gezeigte Ausführungsform der erfindungsgemässen Vorrichtung weist eine kammerartige, als Zellenrad 10 ausgebildete Verarbeitungseinrichtung 12 auf. Von in Umlaufrichtung U - hier im Uhrzeigersinn - um die Drehachse 14 drehend angetriebenen Zellenrad 10 ist nur etwa ein Viertel gezeigt. Weiter weist die Vorrichtung eine Wegführstation 16 mit einem Entnahmeförderer 18 und einem Klammertransporteur 20 auf. Der Entnahmeförderer 18 ist dazu bestimmt, mit seinen Greiferzangen 22 die mittels des Zellenrades 10 zur Wegführstation 16 heran geförderten Druckereiprodukte 24 bei einer Seitenkante 26 zu fassen und aus dem Zellenrad 10 heraus zu fördern. Der Klammertransporteur 20 ist dazu bestimmt, mit seinen Klammern 28 die von den Greiferzangen 22 gehaltenen Druckereiprodukte 24 bei ihrem der Seitenkante 26 gegenüberliegenden Rand 30 zu fassen und nach Freigabe durch die Greiferzangen 22 weg zu transportieren.

Das Zellenrad 10 ist allgemein bekannter Bauart und weist nach aussen offene, radiale Aufnahmeelemente 32 auf, welche als Taschen 34 für die Druckereiprodukte 24 ausgebildet sind.

Die Aufnahmeelemente 32 bzw. Taschen 34 sind in Umlaufrichtung U gesehen stromabwärts und stromaufwärts durch je eine Wand 36 begrenzt, wobei alle Wände 36 gleich ausgebildet sind und jede Wand dem benachbarten Aufnahmeelementen 32 gemeinsam ist. Profilartige Trägerelemente 38 der Wände 36 sind bezüglich der Drehachse 14 wenigstens annähernd in radialer Richtung an einem um die Drehachse 14 in Umlaufrichtung U drehend angetriebenen Tragzylinder 40 befestigt und verlaufen in Richtung der Drehachse 14. Radial innen ist jede Tasche 34 durch einen rinnenförmigen Boden 42 begrenzt, welcher, im gezeigten Ausführungsbeispiel, am vorauslaufenden Trägerelement 38 entweder fest oder an einem am Trägerelement 38 gelagerten Wagen angeordnet ist. Der Aufbau und die Funktionsweise von derartigen Zellenrädern 10 mit in Richtung der Drehachse 14 hin und her bewegbaren Wagen für den Transport der Druckereiprodukte 24 zur Wegführstation 16 sind allgemein bekannt und beispielsweise bereits in der Druckschrift DE 24 47 336 A offenbart.

Jedem Boden 42 ist eine, beispielsweise in bekannter Art und Weise kulissengesteuerte Klemmeinrichtung 44 mit einem Klemmfinger 46 zugeordnet, welcher dazu bestimmt ist, das in das betreffende Ausnahmeelement 32 eingeführte Druckereiprodukt 24 einerseits beim Durchlaufen des unterschlächtigen Teils des Zellenrades 10 als auch gegebenenfalls bei der Vorschubbewegung in Richtung der Drehachse 14 zwischen sich und der zusammenwirkenden Bodenseitenwand 42' festzuklemmen.

Ein in radialer Richtung gesehen ausserhalb des Bodens 42 angeordneter Wandabschnitt 48 der Wand 36 bildet ein Führungselement 50 für die Druckereiprodukte 24 bei deren Herausfördern aus den Aufnahmeelementen 32, wie dies weiter unten zu beschreiben ist. Im gezeigten Ausführungsbeispiel sind die Führungselemente 50 von Flächenelementen 52, beispielsweise aus Blech, gebildet, welche an den Trägerelementen 38 auf der in Umlaufrichtung U vorlaufenden Seite befestigt und mit ihrem in radialer Richtung über die Trägerelemente 38 vorstehenden Abschnitt entgegen der Umlaufrichtung U gebogen sind. Radial innen weisen diese Flächenelemente 52 einen Randabschnitt 54 auf, welcher die in Umlaufrichtung U nachlaufende Seitenwand 42" des Bodens 42 mit Spiel überlappt, um zu gewährleisten, dass beim Einführen der Druckereiprodukte 24 in die Aufnahmeelemente 32, von radial aussen gegen radial innen, diese sicher am Boden 42 zur Anlagen gelangen können. Weiter weist jeder Wandabschnitt 48 ein flächiges, beispielsweise aus Blech geformtes, Abdeckeelement 56 auf, welches radial aussen mit dem Flächenelement 52 fest verbunden ist und bezüglich des betreffenden Trägerelements 38 nachlaufend in einem Abstand in radialer Richtung gegen innen bis in die Nähe zum betreffenden Boden 42 verläuft, wo es mittels eines auslegerartigen Stützorgans 58 am Trägerelement 38 befestigt ist. Dadurch ist die Bodenseitenwand 42' überdeckt, was wiederum das problemlose Einführen der Druckereiprodukte 24 in die Aufnahmeelemente 32 unterstützt.

Die Wände 36 des Zellenrades 10 weisen, in Richtung der Drehachse 14 gesehen, bei der Wegführstation 16 in radialer Richtung gegen aussen offene Ausnehmungen 60 auf, welche das Hindurchbewegen einerseits der Greiferzangen 22 und andererseits der Klammern 28 ermöglichen.

Die Aufnahmeelemente 32 bzw. Taschen 34 werden somit entlang einer zur Drehachse 14 konzentrischen kreisförmigen Umlaufbahn 62 in Umlaufrichtung U angetrieben und sind bezüglich dieser Umlaufbahn 62 hintereinander und rechtwinklig angeordnet, wobei sie vorzugsweise bezüglich der Umlaufrichtung U leicht nach hinten geneigt sind.

Die im gezeigten Ausführungsbeispiel in bekannter Art und Weise kulissengesteuerten Greiferzangen 22 und Klammern 28 sind vorzugsweise identischer Bauart und können beispielsweise ausgebildet sein, wie dies aus dem Dokument EP 0 600 183 A bekannt ist. Bezüglich Aufbau und Funktionsweise wird ausdrücklich auf dieses Dokument verwiesen.

Die Anzahl, im gezeigten Ausführungsbeispiel zwölf, Greiferzangen 22 des Entnahmeförderers 18 sind entlang einer in sich geschlossenen Bewegungsbahn 64 in einer der Umlaufrichtung U der Verarbeitungseinrichtung 12 entgegengesetzten Umlaufrichtung E angetrieben.

In bevorzugterweise sind sie am Umfang eines Trägerrades 66 gleichmässig verteilt angeordnet, welches um eine parallel zur Drehachse 14 verlaufende Übernahmeachse 68 in Umlaufrichtung E drehend angetrieben ist.

An dieser Stelle sei erwähnt, dass die Greiferzangen 22 auch an einem in sich geschlossenen Förderorgan 70, beispielsweise einer Kette, im Abstand hintereinander angeordnet sein könnten, welches beim der Verarbeitungseinrichtung 10 zugewandten Ende um ein dem Trägerrad 66 entsprechendes Umlenkrad geführt ist.

Die Bewegungsbahn 64 verläuft somit in einem einen Übernahmeabschnitt 72 bildenden, der Verarbeitungseinrichtung 12 zugewandten Kreisbogen um die Übernahmeachse 68, wobei jeweils eine Greiferzange 22 mit einem Aufnahmeelement 32 zusammentrifft und durch die Ausnehmung 60 hindurch in das Aufnahmeelement 32 hinein und dann wieder aus diesem heraus bewegt wird.

Beim Erreichen des Übernahmeabschnitts 72 sind die Greiferzangen 22 geöffnet und bezüglich ihrer Umlaufrichtung E schräg nach vorne und nach radial aussen gerichtet. Sie umfassen jeweils das im betreffenden Aufnahmeelement 32 angeordnete und mit seinem Rand 30, beispielsweise dem Falz, am Boden 42 anliegende Druckereiprodukt 24 bei dessen dem Rand 30 gegenüberliegenden Seitenkante 26, gegebenenfalls bei der sogenannten Blume, bezüglich der Drehachse 14 von radial aussen in Richtung gegen radial innen. Etwa beim Erreichen des der Drehachse 14 nächsten Punkts des Übernahmeabschnitts 72 werden die Greiferzangen 22 geschlossen. Im in Umlaufrichtung E nachfolgenden Bereich des Übernahmeabschnitts 72 bewegen sich die Greiferzangen 22 aus den Aufnahmeelementen 32 heraus, wobei sie das jeweils gefasste Druckereiprodukt 24 festhalten und mitnehmen. Gleichzeitig werden die Greiferzangen 22 von ihrer beim Schliessen etwa radialen Richtung entgegen ihrer Umlaufrichtung E, nach hinten verschwenkt, so dass sie beim Erreichen des stromabwärts liegenden Endes des Übernahmeabschnitts 72 bezüglich der Bewegungsbahn 64 in einem Winkel von etwa 45° angeordnet sind. Beim Erreichen des Endes des Übernahmeabschnitts 72 werden die Greiferzangen 22 zur Freigabe des jeweiligen Druckereiprodukts 24 geöffnet.

In Fig. 1 befindet sich die Übernahmeachse 68 bezüglich der Drehachse 14 der Verarbeitungseinrichtung 12 in einem Abstand um kleine Druckereiprodukte 24 zu verarbeiten. Sind jedoch im Format grössere Druckereiprodukte 24 zu verarbeiten, deren Abstand zwischen der Seitenkante 26 und dem Rand 30 grösser ist als bei den kleinen Druckereiprodukten 24, wird die Übernahmeachse 68 und somit der Übernahmeabschnitt 72 bezüglich der Drehachse 14 in radialer Richtung gegen aussen verschoben, wie dies in der Fig. 2 mit ausgezogenen Linien angedeutet ist; mit strichpunktierten Linien ist dort die Lage des Trägerrades 66 beim Verarbeiten von formatkleinen Druckereiprodukten 24, wie bei Fig. 1, angedeutet. Die Anpassung an das Format der Druckereiprodukte 24 erfolgt somit im gezeigten Ausführungsbeispiel durch Verschieben der Übernahmeachse 68 und somit des Übernahmeabschnitts 72 entlang einer Geraden 74, welche wenigstens annähernd durch die Drehachse 14 verläuft.

Der Klammertransporteur 20 ist, in Umlaufrichtung U der Verarbeitungseinrichtung 12 gesehen, bezüglich des Entnahmeförderers 18 stromabwärts angeordnet. Seine Klammern 28 sind entlang einer in sich geschlossenen Klammerbahn 76 in einer Wegführrichtung W angetrieben, welche zur Umlaufrichtung U gleichsinnig und zur Umlaufrichtung E des Entnahmeförderers 18 gegensinnig ist.

Im gezeigten Ausführungsbeispiel sind die Klammern 28 an einem weiteren Förderorgan 78, beispielsweise einer Kette, im Abstand hintereinander angeordnet. Das weitere Förderorgan 78 ist in bekannten Art und Weise kanal- oder schienengeführt und beim der Verarbeitungseinrichtung 12 zugewandten Ende des Klammertransporteurs 20 um ein Umlenkrad umgelenkt. Die Klammerbahn 76 weist somit in ihrem dem Zellenrad 10 zugewandten Endbereich eine halbkreisbogenartige Form auf. Weiter sei an dieser Stelle erwähnt, dass der Abstand zwischen der Drehachse 14 und der Bewegungsbahn der Klammern 28 etwa dem Abstand zwischen der Drehachse 14 und der Bewegungsbahn der Greiferzangen 22 entspricht, wenn sich der Übernahmeabschnitt 72 in einer Position für die Verarbeitung von formatkleinen Druckereiprodukten 24 befindet. Weiter schliessen im gezeigten Ausführungsbeispiel Verbindungsgeraden zwischen den der Drehachse 14 nächsten Punkten der Bewegungsbahn 64 der Greiferzangen 22 und der Klammerbahn 76 mit der Drehachse 14 einen Winkel von etwa 45° ein. Weiter sei erwähnt, dass der Klammertransporteur 20 vorzugsweise ortsfest angeordnet ist und für die Anpassung an das zu verarbeitende Format der Druckereiprodukte 24 in seiner Lage nicht verschoben wird. Es sei weiter erwähnt, dass die Bewegungsbahn 64 und die Klammerbahn 76 in einer Ebene verlaufen, die rechtwinklig zur Drehachse 14 mittig zur Ausnehmung 60 verläuft.

Gleich wie mit jedem Aufnahmeelemente 32 eine Greiferzange 20 zusammentrifft, trifft mit einer Greiferzange 22 eine Klammer 28 zusammen.

Der Entnahmeförderer 18 weist in bevorzugter Weise einen Antriebsmotor 80 auf, welcher über eine Steuereinrichtung mit der Verarbeitungseinrichtung 12 synchronisierbar und in der Phasenlage einstellbar ist. Dazu weist einerseits die Verarbeitungseinrichtung 12 einen ersten Sensor 82 zum Erfassen der Drehbewegung des Zellenrads 10 und andererseits der Entnahmeförderer 18 einen zweiten Sensor 84 auf, welcher die Drehung des Trägerrads 66 erfasst. Desgleichen kann der Klammertransporteur 20 mittels eines weiteren Antriebsmotors 80' angetrieben sein. Zur Synchronisation des Klammertransporteurs 20 mit dem Entnahmeförderer 18 weist der Klammertransporteur 20 einen dritten Sensor 86 auf, welcher die Drehbewegung des Umlenkrades erfasst.

In bevorzugterweise sind der Entnahmeförderer 18 und der Klammertransporteur 20 synchron und in einer festen Phasenlage relativ zueinander angetrieben, unabhängig vom Format der zu verarbeiteten Druckereiprodukte 24. Es ist deshalb auch denkbar, diese starr zu koppeln und mit einem gemeinsamen Antriebsmotor anzutreiben.

Auch zwischen dem Zellenrad 10 und dem Entnahmeförderer 18 kann in bevorzugterweise die relative Phasenlage unabhängig vom Format der zu verarbeitenden Druckereiprodukte 24 beibehalten werden. Gegebenenfalls kann eine geringfügige Änderung der Phasenlage bei unterschiedlichen Verarbeitungsgeschwindigkeiten, beispielsweise ab 28'000 Druckereiprodukten 24 pro Stunde, angezeigt sein.

Zwischen dem Entnahmeförderer 18 und dem Klammertransporteur 20 ist ein Überwachungssensor 88 angeordnet, um festzustellen, ob die Klammern 28 die Druckereiprodukte 24 von den Greiferzangen 22 übernommen haben. Weiter weist die Verarbeitungseinrichtung 12 einen Anwesenheitssensor 90 auf, welcher feststellt, ob der Entnahmeförderer 18 fälschlicherweise ein Druckereiprodukt 24 nicht erfasst und aus dem betreffenden Aufnahmeelement 32 weggefördert hat, so dass dieses im Aufnahmeelement 32 verbleibt. Es kann jedem Aufnahmeelement 32 ein Anwesenheitssensor 90 zugeordnet sein, welche beispielsweise an den Wänden 36 befestigt sind.

Die in den Fig. 1 und 2 gezeigte Ausführungsform der erfindungsgemässen Vorrichtung arbeitet wie folgt:

Wie weiter oben beschrieben erfassen die Greiferzangen 22 einzelweise die Druckereiprodukte 24 in den Aufnahmeelementen 32 bei der Seitenkante 26 in einem Abschnitt der Umlaufbahn 62, welches als Kreisbogen um die Drehachse 14 verläuft. Im Zuge der Weiterdrehung des Zellenrades 10 und der Weiterbewegung im Übernahmeabschnitt 72 bewegen sich die Greiferzangen 22 aus den Aufnahmeelementen 32 heraus und nehmen das entsprechende Druckereiprodukt 24 mit. Da der Abstand zwischen den Führungselementen 50 und der Drehachse 14 grösser ist, als der Abstand der Greiferzangen 22 zur Übernahmeachse 68, werden die Druckereiprodukte 24 durch die Stützorgane 58, bezüglich der Achse 14 gesehen, in radialer Richtung gegen aussen, angehoben, indem sie entlang den Stützorganen 58 gleiten. Infolge dieses Anhebens wird der freie Endbereich der Druckereiprodukte 24 mit dem Rand 30 in jeweils das Maul einer offenen Klammer 28 eingeführt, welche dazu bezüglich der Klammerbahn 76 in Wegführrichtung W gegen schräg vorne verschwenkt ist. Die Klammern 28 werden in Schliessstellung überführt, kurz bevor das betreffende Stützorgan 58, infolge der Drehung in Umlaufrichtung U, vom betreffenden Druckereiprodukt 24 abläuft. Sobald eine Klammer 28 ihre Schliessstellung erreicht hat, wird sofort die zugordnete Greiferzange 22 geöffnet, um das betreffende Druckereiprodukt 24 freizugeben, welches mittels des Klammertransporteurs 20 zur Weiterverarbeitung weggefördert wird.

Der Vollständigkeit halber sei erwähnt, dass die Wegführstation 16 mit dem Zellenrad 10 bezüglich der Drehachse 14 in einem Kreisbogen zusammenwirkt, welcher sich etwa über 45° bis 90° erstreckt. Weiter verläuft dieser Kreisbogen vorzugsweise in einem Bereich der Umlaufbahn 62, welcher oberhalb einer Horizontalebene durch die Drehachse 14 und auf jener Seite einer Vertikalebene durch die Drehachse 14 verläuft, in welcher die Aufnahmeelemente 32 mit einer Vertikalkomponenten von unten in Richtung gegen oben bewegt werden.

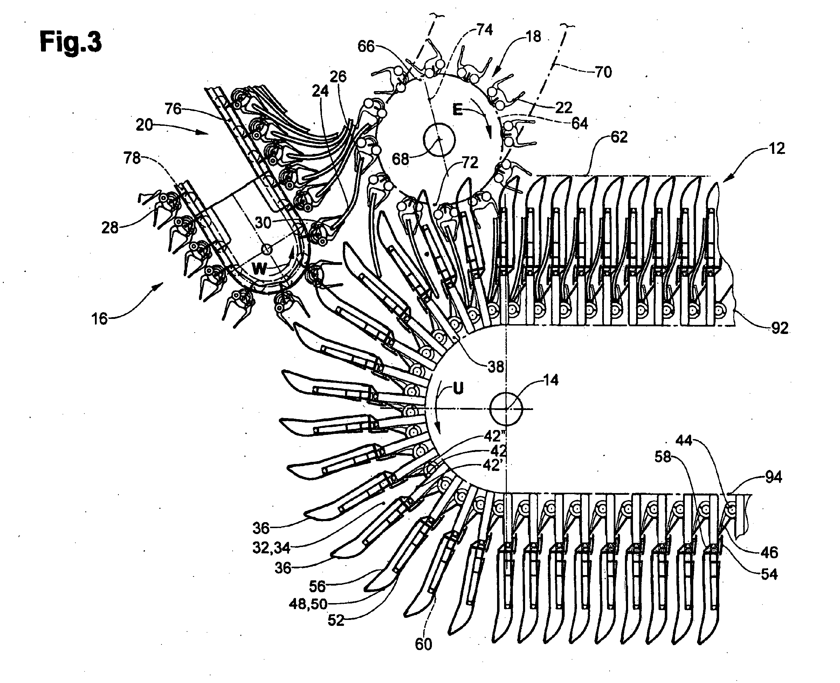

Es ist jedoch auch möglich, die Wegführstation bezüglich der genannten Vertikalebene auf der anderen Seite anzuordnen, wie dies im in der Fig. 3 gezeigten Ausführungsbeispiel mit einer als Rundlauf ausgebildeten Verarbeitungseinrichtung 12 gezeigt ist.

Der Rundlauf weist eine Vielzahl von ebenfalls Taschen 34 bildenden Aufnahmeelementen 32 auf, welche gleich ausgeführt sind, wie weiter oben im Zusammenhang mit den Fig. 1 und 2 beschrieben. Die Wände 36 sind an einem in sich geschlossenen Umlauforgan 94, beispielsweise Ketten, befestigt, welche am stromaufwärts liegenden und, wie in Fig. 3 gezeigt, stromabwärts liegenden Endbereich der Verarbeitungseinrichtung 12 je um eine horizontale Drehachse 14, beispielsweise mittels eines Umlenkrades, herumgeführt sind. Die Umlaufbahn 62 der Aufnahmeelemente 32 verläuft somit zum stromabwärts liegenden Ende der Verarbeitungseinrichtung 12 hin geradlinig und vorzugsweise in horizontaler Richtung und dann in einem Kreisbogen, hier in einem Halbkreisbogen, um die Drehachse 14 herum. An dieser Stelle sei erwähnt, dass infolge des Kreisbogens die Taschen 34 bzw. Aufnahmeelemente 32 beim Einlaufen in den Kreisbogen radial aussen weiter geöffnet werden, da die Wände 36 aus ihrer im oberen, geraden Abschnitt der Umlaufbahn parallelen und zur Umlaufbahn rechtwinkligen Lage in einer zur Drehachse 14 radiale Lage überführt werden. Weiter ist jede Wand 36 in gleicher Art und Weise, wie bei der Ausführungsform der Fig. 1 und 2 mit einem Stützorgan 58 und einer Ausnehmung 60 versehen. Weiter ist jedes Aufnahmeelement 32 mit einem rinnenartigen Boden 42 und einer Klemmeinrichtung 44 ausgestattet, wie dies im Zusammenhang mit der Ausführungsform gemäss den Fig. 1 und 2 erläutert wurde.

In Umlaufrichtung U gesehen, welche hier im Gegenuhrzeigersinn verläuft, ist Eingangs der Kreisbogens der Umlaufbahn 62 zuerst der Entnahmeförderer 18 und bezüglich diesem stromabwärts folgend der Klammertransporteur 20 angeordnet. Sowohl der Entnahmeförderer 18 als auch der Klammertransporteur 20 sind genau gleich ausgebildet wie weiter oben im Zusammenhang mit den Fig. 1 und 2 erläutert, wobei die Umlaufrichtung E und W an die umgekehrte Umlaufrichtung U angepasst sind.

Zur Anpassung an das zu verarbeitende Format der Druckereiprodukte 24 ist auch hier der um die Übernahmeachse 68 konzentrisch verlaufende Übernahmeabschnitt 72 in seiner Distanz zur Drehachse 14 einstellbar, indem eine Verschiebung entlang der Geraden 74 erfolgt, welche wenigstens annähernd durch die Drehachse 14 verläuft. Auch die Funktionsweise und das Zusammenwirken von Verarbeitungseinrichtung 12, Entnahmeförderer 18 und Klammertransporteur 20 erfolgt in genau gleicher Art und Weise wie weiter oben beschrieben.

Bei der in der Fig. 3 gezeigten Ausführungsform erfolgt kein Verschieben der Druckereiprodukte 24 in den Aufnahmeelementen 32 in einer Richtung rechtwinklig zur Umlaufrichtung U. Wie dies aus dem Dokument CH 669 944 bekannt ist, kann jedoch auf eine einfache Art und Weise die in der Fig. 3 gezeigte Ausführungsform derart ausgebildet werden, dass auch hier ein entsprechendes Verschieben der Druckereiprodukte 24 erfolgen kann.

Der Vollständigkeit halber sei erwähnt, dass bei allen gezeigten Ausführungsformen die Klemmfinger 46 der Klemmeinrichtung 44 zur Freihabe der betreffenden Druckereiprodukte 24 spätestens dann von ihrer Klemmstellung in die Freigabestellung verschwenkt werden, wenn eine Greiferzange 22 das betreffende Druckereiprodukt 24 erfasst hat.

Weiter ist es denkbar, den Klammertransporteur 20 vorübergehend stillzulegen beziehungsweise zu inaktivieren und die Druckereiprodukte 24 in bekannter Art und Weise mittels des Entnahmeförderers 18 von der Verarbeitungseinrichtung 12 weg zu fördern. Dazu ist der Entnahmeförderer 18 vorzugsweise mit dem Förderorgan 70 ausgestattet. Falls gefaltete Druckereiprodukte 24 mit ihren den Rand 30 bildenden Falz in den Aufnahmeelementen 32 am Boden 42 anliegend dem Entnahmeförderer 18 zugefördert werden, werden diese in der vorliegenden Betriebsart an der die Seitenkante 26 bildenden Blume gehalten weggefördert.

Es sei auch erwähnt, dass gleichzeitig mehrere Druckereiprodukte 24 erfasst und weggefördert werden können, wenn die stapelartig, eingesteckt oder zusammengetragen in den Aufnahmeelementen 32 angeordnet der Wegführstation 16 zugefördert werden.

## Patentansprüche

1. Vorrichtung zum Verarbeiten von Druckereiprodukten, mit einer eine Vielzahl entlang einer Umlaufbahn (62) in Umlaufrichtung (U) angetriebene, hintereinander und quer zur Umlaufbahn (62) angeordnete Aufnahmeelemente (32) aufweisenden Verarbeitungseinrichtung (12) und einer Wegführstation (16) zum Ergreifen und Wegfördern von in den Aufnahmeelementen (32) zur Wegführstation (16) herangeförderten Druckereiprodukten (24) in einem in einem Kreisbogen um eine Drehachse (14) verlaufenden Abschnitt der Umlaufbahn (62), wobei die Wegführstation (16) einen Entnahmeförderer (18) mit einer Anzahl entlang einer in sich geschlossenen Bewegungsbahn (64) entgegen der Umlaufrichtung (U) umlaufend angetriebenen Greiferzangen (22) aufweist, **dadurch gekennzeichnet, dass** die Greiferzangen (22) in einem, in einem Kreisbogen um eine zur Drehachse (14) parallelen Übernahmeachse (68) herum verlaufenden Übernahmeabschnitt (72) der Bewegungsbahn (64), synchron zu den Aufnahmeelementen (32), in diese hinein und, nach dem Erfassen der Druckereiprodukte (24) bei einer Seitenkante (26), aus den Aufnahmeelementen (32) hinaus bewegt werden, wobei die Wegführstation (16) einen, in Umlaufrichtung (U) gesehen, stromabwärts des Entnahmeförderers (18) angeordneten Klammertransporteur (20) mit gleichsinnig zur Umlaufrichtung (U) entlang einer in sich geschlossenen Klammerbahn (76) angetriebenen, gesteuerten Klammern (28) aufweist, welche dazu im Stande sind, die von den Greiferzangen (22) gehaltenen Druckereiprodukt (24) bei ihrem der Seitenkante (26) gegenüberliegenden Rand (30) zu erfassen und nach Freigabe durch die Greiferzangen (22) weiter zu fördern.

2. Vorrichtung nach Anspruch 1, **dadurch gekennzeichnet, dass** die Klammern (28) an einem umlaufend angetriebenen Förderorgan (78) im Abstand hintereinander angeordnet sind.

3. Vorrichtung nach Anspruch 1 oder 2, **dadurch gekennzeichnet, dass** die Lage des Übernameabschnitts (72), zur Anpassung an das Format der Druckereiprodukte (24), durch Verschieben der Übernahmeachse (68) in einer wenigstens annähernd radial zur Drehachse (14) verlaufenden Richtung einstellbar ist.

4. Vorrichtung nach einem der Ansprüche 1 bis 3, **dadurch gekennzeichnet, dass** der Klammertransporteur (20) ortsfest ist.

5. Vorrichtung nach einem der Ansprüche 1 bis 4, **dadurch gekennzeichnet, dass** die Aufnahmeelemente (32) taschenartig ausgebildet sind.

6. Vorrichtung nach einem der Ansprüche 1 bis 5, **dadurch gekennzeichnet, dass** jedes Aufnahmeelement (32) eine, in Umlaufrichtung (U) gesehen, nachlaufende Wand (36) mit einem radial aussen liegenden Führungselement (50) für die von den Greiferzangen (22) gehaltenen Druckereiprodukte (24) aufweist, um diese in die geöffneten Klammern (28) einzuführen.

7. Vorrichtung nach einem der Ansprüche 1 bis 6, **dadurch gekennzeichnet, dass** die Greiferzangen (22) an einem um die Übernahmeachse (68) drehend angetriebenen Trägerrad (66) angeordnet sind und somit die Bewegungsbahn (64) eine Kreisbahn bildet.

8. Vorrichtung nach einem der Ansprüche 1 bis 7, **dadurch gekennzeichnet, dass** die Bewegungsbahn (64) der Greiferzangen (22) und die Klammerbahn (76) in einer gemeinsamen Ebene verlaufen, welche rechtwinklig zur Drehachse (14) verläuft.

9. Vorrichtung nach einem der Ansprüche 1 bis 8, **dadurch gekennzeichnet, dass** die Aufnahmeelemente (32) eine in radialer Richtung gegen aussen offene Ausnehmung (60) aufweisen, durch welche hindurch die Greiferzangen (22) und die Klammern (28) bewegt werden.

10. Vorrichtung nach einem der Ansprüche 1 bis 9, **dadurch gekennzeichnet, dass** der Entnahmeförderer (18) einen Antriebsmotor (80) aufweist, welcher bezüglich der Verarbeitungseinrichtung (12) synchronisierbar und in der Phasenlage einstellbar ist.

11. Vorrichtung nach einem der Ansprüche 1 bis 10, **dadurch gekennzeichnet, dass** der Entnahmeförderer (18) und der Klammertransporteur (20) synchron und in einer festen Phasenlage relativ zu einander angetrieben sind.

12. Vorrichtung nach einem der Ansprüche 1 bis 11, **dadurch gekennzeichnet, dass** die Verarbeitungseinrichtung (12) trommelartig ausgebildet ist, und die Aufnahmeelemente (32) in einer Kreisbahn um die Drehachse (14) umlaufen.

13. Vorrichtung nach einem der Ansprüche 1 bis 12, **dadurch gekennzeichnet, dass** die Klammerbahn (76) in ihrem der Verarbeitungseinrichtung (12) zugewandten Endbereich kreisbogenartig verläuft.

14. Vorrichtung nach einem der Ansprüche 1 bis 13, **gekennzeichnet durch** einen Überwachungssensör (88) zur Überwachung ob die Klammern (28) von den Greiferzangen (22) die Druckereiprodukte (24) übernommen haben.

15. Vorrichtung nach einem der Ansprüche 1 bis 14, **dadurch gekennzeichnet, dass** die Verarbeitungseinrichtung (12) einen. Anwesenheitssensor (90) aufweist, um festzustellen, ob der Entnahmeförderer (18) alle Druckereiprodukte (24) aus den Aufnahmeelementen (32) weggefördert hat.

16. Verfahren zum Verarbeiten von Druckereiprodukten, bei welchem die Druckereiprodukte (24) mittels einer, eine Vielzahl entlang einer Umlaufbahn (62) in Umlaufrichtung (U) angetriebene, hintereinander und quer zur Umlaufbahn (62) angeordnete Aufnahmeelemente (32) aufweisenden Verarbeitungseinrichtung (12) an eine Wegführstation (16) zum Ergreifen und Wegfördern der Druckereiprodukte (24) von der Verarbeitungseinrichtung (12) heran gefördert werden, **dadurch gekennzeichnet, dass** die Druckereiprodukte (24) in einem, in einem Kreisbogen, um eine Drehachse (14) verlaufenden Abschnitt der Umlaufbahn (62) mittels Greiferzangen (22) eines Entnahmeförderers (18) der Wegführstation (16) bei einer Seitenkante (26) ergriffen und aus den Aufnahmeelementen (32) heraus bewegt werden, wobei die Anzahl Greiferzangen (22) entlang einer in sich geschlossenen Bewegungsbahn (64) entgegen der Umlaufrichtung (U) umlaufend angetrieben und in einem, in einem Kreisbogen um eine zur Drehachse (14) parallelen Übernahmeachse (68) herum verlaufenden Übernahmeabschnitt (72) der Bewegungsbahn (64), synchron zu den Aufnahmeelementen (32), in diese hinein und, nach dem Erfassen der Druckereiprodukte (24) bei der Seitenkante (26), aus den Aufnahmeelementen (32) hinaus bewegt werden, wobei die von den Greiferzangen (22) gehaltenen Druckereiprodukte (24) bei ihrem der Seitenkante (26) gegenüberliegenden Rand (30) von Klammern (28) eines Klammertransporteurs (20) der Wegführstation (16) erfasst und nach Freigabe durch die Greiferzangen (22) weitergefördert werden, wobei der Klammertransporteur (20), in Umlaufrichtung (U) gesehen, stromabwärts des Entnahmeförderers (18) angeordnet ist und die gesteuerten Klammern (28) gleichsinnig zur Umlaufrichtung (U) entlang einer in sich geschlossenen Klammerbahn (76) angetrieben werden.

17. Verfahren nach Anspruch 16, **dadurch gekennzeichnet, dass** Druckereiprodukte (24), infolge Inaktivierung des Klammertransporteurs (20), mittels des Entnahmeförderers (18) von der Verarbeitungseinrichtung (12) weggefördert werden.

## Claims

1. A device for processing printing products, with a processing means (12) having a plurality of receiving elements (32) which are driven along a circulation path (62) in the direction of circulation (U) and are arranged one after another and transversely to the circulation path (62), and a discharge station (16) for gripping and discharging printing products (24), which are brought in the receiving elements (32) up to the discharge station (16), in a portion of the circulation path (62) that runs in an arc of a circle about an axis of rotation (14), wherein the discharge station (16) has a removal conveyor (18) with a number of gripper tongs (22) which are driven so as to circulate along a self-enclosed movement path (64) counter to the direction of circulation (U) **characterized in that** the gripper tongs (22) are moved in a takeover portion (72) of the movement path (64), which runs in an arc of a circle around a takeover axis (68) which is parallel to the axis of rotation (14), into the receiving elements (32) in synchronization therewith and, after the grasping of the printing products (24) at a side rim (26), out of the receiving elements (32), wherein the discharge station (16) has a clamp transporter (20) which is arranged, viewed in the direction of circulation (U), downstream of the removal conveyor (18) and has controlled clamps (28) which are driven along a self-enclosed clamp path (76) in the same direction as the direction of circulation (U) and are capable of grasping the printing products (24), which are held by the gripper tongs (22), at their edge (30) opposing the side rim (26) and of conveying them onward once released by the gripper tongs (22).

2. The device as claimed in claim 1, wherein the clamps (28) are arranged, set apart one after another, on a conveying member (78) which is driven in a circulating manner.

3. The device as claimed in claim 1 or 2, wherein the position of the takeover portion (72) can be set, for adaptation to the size of the printing products (24), by displacing the takeover axis (68) in a direction running at least approximately radially to the axis of rotation (14).

4. The device as claimed in one of claims 1 to 3, wherein the clamp transporter (20) is stationary.

5. The device as claimed in one of claims 1 to 4, wherein the receiving elements (32) are embodied in a pocket-like manner.

6. The device as claimed in one of claims 1 to 5, wherein each receiving element (32) has a, viewed in the direction of circulation (U), trailing wall (36) with a radially external guide element (50) for the printing products (24) held by the gripper tongs (22) in order to introduce the printing products into the opened clamps (28).

7. The device as claimed in one of claims 1 to 6, wherein the gripper tongs (22) are arranged on a carrier wheel (66), which is driven so as to rotate about the takeover axis (68), and the movement path (64) thus forms a circular path.

8. The device as claimed in one of claims 1 to 7, wherein the movement path (64) of the gripper tongs (22) and the clamp path (76) run in a common plane running at right angles to the axis of rotation (14).

9. The device as claimed in one of claims 1 to 8, wherein the receiving elements (32) have a recess (60) which is outwardly open in the radial direction and through which the gripper tongs (22) and the clamps (28) are moved.

10. The device as claimed in one of claims 1 to 9, wherein the removal conveyor (18) has a drive motor (80) which can be set so as to be synchronizable with respect to the processing means (12) and in the phase position.

11. The device as claimed in one of claims 1 to 10, wherein the removal conveyor (18) and the clamp transporter (20) are driven in synchronization and in a fixed phase position relative to each other.

12. The device as claimed in one of claims 1 to 11, wherein the processing means (12) is embodied in a drum-like manner and the receiving elements (32) circulate in a circular path about the axis of rotation (14).

13. The device as claimed in one of claims 1 to 12, wherein the clamp path (76) runs in the manner of an arc of a circle in its end region facing the processing means (12).

14. The device as claimed in one of claims 1 to 13, **characterized by** a monitoring sensor (88) for monitoring whether the clamps (28) have taken over the printing products (24) from the gripper tongs (22).

15. The device as claimed in one of claims 1 to 14, wherein the processing means (12) has a presence sensor (90) to ascertain whether the removal conveyor (18) has discharged all the printing products (24) from the receiving elements (32).

16. A method for processing printing products, in which the printing products (24) are brought, by means of a processing means (12) having a plurality of receiving elements (32) which are driven along a circulation path (62) in the direction of circulation (U) and are arranged one after another and transversely to the circulation path (62), up to a discharge station (16) for gripping and discharging the printing products (24) from the processing means (12) **characterized in that** the printing products (24) are gripped at a side rim (26) by means of gripper tongs (22) of a removal conveyor (18) of the discharge station (16) in a portion of the circulation path (62) that runs in an arc of a circle about an axis of rotation (14) and are moved out of the receiving elements (32), wherein the number of gripper tongs (22) are driven so as to circulate along a self-enclosed movement path (64) counter to the direction of circulation (U) and moved in a takeover portion (72) of the movement path (64), which runs in an arc of a circle around a takeover axis (68) which is parallel to the axis of rotation (14), into the receiving elements (32) in synchronization therewith and, after the grasping of the printing products (24) at the side rim (26), out of the receiving elements (32), wherein the printing products (24), which are held by the gripper tongs (22), are grasped at their edge (30) opposing the side rim (26) by clamps (28) of a clamp transporter (20) of the discharge station (16) and conveyed onward once released by the gripper tongs (22), wherein the clamp transporter (20) is arranged, viewed in the direction of circulation (U), downstream of the removal conveyor (18) and the controlled clamps (28) are driven along a self-enclosed clamp path (76) in the same direction as the direction of circulation (U).

17. The method as claimed in claim 16, wherein printing products (24) are discharged from the processing means (12) by means of the removal conveyor (18) as a consequence of deactivation of the clamp transporter (20).

## Revendications

1. Dispositif pour le traitement de produits d'imprimerie avec une installation de traitement (12) ayant une multitude d'éléments de réception (32) qui sont entraînés le long d'une trajectoire de circulation (62) dans la direction de circulation (U) et sont disposés l'un derrière l'autre, transversalement par rapport à la trajectoire de circulation (62), et une station d'évacuation (16) pour la saisie et l'évacuation des produits d'imprimerie (24), qui sont amenés dans les éléments de réception (32) jusqu'à la station d'évacuation (16), dans une portion de la trajectoire de circulation (62) qui s'étend en un arc de cercle autour d'un axe de rotation (14), dans lequel la station d'évacuation (16) présente un convoyeur d'évacuation (18) avec un nombre de pinces de saisie (22) entraînées de façon à circuler le long d'une trajectoire de déplacement (64) refermée sur elle-même opposée à la direction de circulation (U), **caractérisée en ce que** les pinces de saisie (22) sont déplacées dans une portion de prise en charge (72) de la trajectoire de déplacement (64), qui s'étend en un arc de cercle autour d'un axe de prise en charge (68) parallèle à l'axe de rotation (14), dans les éléments de réception (32) de façon synchronisée avec ceux-ci et, après la saisie des produits d'imprimerie (24) à un bord latéral (26), en dehors des éléments de réception (32), dans lequel la station d'évacuation (16) présente un transporteur à pinces (20) qui est disposé, vu dans la direction de circulation (U), en aval du convoyeur d'évacuation (18) et présente des pinces commandées (28) qui sont entraînées le long d'une trajectoire de pinces (76) refermée sur elle-même dans la même direction que la direction de circulation (U) et sont capables de saisir les produits d'imprimerie (24), qui sont tenus par les pinces de saisie (22), à leur bord (30) opposé au bord latéral (26) et de les transporter plus loin après qu'ils ont été relâchés par les pinces de saisie (22).

2. Dispositif selon la revendication 1, **caractérisé en ce que** les pinces (28) sont disposées, à distance l'une derrière l'autre, sur un organe de transport (78) entraîné en circulation.

3. Dispositif selon la revendication 1 ou 2, **caractérisé en ce que** la position de la portion de prise en charge (72) est réglable afin de s'ajuster au format des produits d'imprimerie (24) en déplaçant l'axe de prise en charge (68) dans une direction s'étendant au moins approximativement radialement par rapport à l'axe de rotation (14).

4. Dispositif selon l'une des revendications 1 à 3, **caractérisé en ce que** le transporteur à pinces (20) est fixe.

5. Dispositif selon l'une des revendications 1 à 4, **caractérisé en ce que** les éléments de réception (32) sont façonnés en forme de poche.

6. Dispositif selon l'une des revendications 1 à 5, **caractérisé en ce que** chaque élement de réception (32) présente, vu dans la direction de circulation (U), une paroi arrière (36) avec un élement de guidage (50), situé à l'extérieur radialement, pour les produits d'imprimerie (24) tenus par les pinces de saisie (22) afin d'introduire ceux-ci dans les pinces (28) ouvertes.

7. Dispositif selon l'une des revendications 1 à 6, **caractérisé en ce que** les pinces de saisie (22) sont disposées sur une roue porteuse (66), qui est entraînée de façon à tourner autour de l'axe de prise en charge (68), et la trajectoire de déplacement (64) forme par conséquent une trajectoire circulaire.

8. Dispositif selon l'une des revendications 1 à 7, **caractérisé en ce que** la trajectoire de déplacement (64) des pinces de saisie (22) et la trajectoire de pinces (76) se trouvent dans un plan commun s'étendant à angle droit par rapport à l'axe de rotation (14).

9. Dispositif selon l'une des revendications 1 à 8, **caractérisé en ce que** les éléments de réception (32) présentent un évidement (60) qui est ouvert radialement vers l'extérieur et à travers lequel les pinces de saisie (22) et les pinces (28) sont déplacées.

10. Dispositif selon l'une des revendications 1 à 9, **caractérisé en ce que** le convoyeur d'évacuation (18) présente un moteur d'entraînement (80) synchronisable par rapport à l'installation de traitement (12) et réglable dans la position de phase.

11. Dispositif selon l'une des revendications 1 à 10, **caractérisé en ce que** le convoyeur d'évacuation (18) et le transporteur à pinces (20) sont entraînés de façon synchronisée et dans une position de phase fixe l'un par rapport à l'autre.

12. Dispositif selon l'une des revendications 1 à 11, **caractérisé en ce que** l'installation de traitement (12) est façonnée en forme de tambour et les éléments de réception (32) circulent le long d'une trajectoire circulaire autour de l'axe de rotation (14).

13. Dispositif selon l'une des revendications 1 à 12, **caractérisé en ce que** la trajectoire de pinces (76) s'étend en forme d'arc de cercle dans sa partie finale faisant face à l'installation de traitement (12).

14. Dispositif selon l'une des revendications 1 à 13, **caractérisé par** un capteur de surveillance (88) pour surveiller si les pinces (28) ont pris les produits d'imprimerie (24) des pinces de saisie (22).

15. Dispositif selon l'une des revendications 1 à 14, **caractérisé en ce que** l'installation de traitement (12) présente un capteur de présence (90) pour vérifier si le convoyeur d'évacuation (18) a évacué tous les produits d'imprimerie (24) des éléments de réception (32).

16. Procédé pour le traitement de produits d'imprimerie, dans lequel les produits d'imprimerie (24) sont amenés, au moyen d'une installation de traitement (12) présentant une multitude d'éléments de réception (32) qui sont entraînés le long d'une trajectoire de circulation (62) dans la direction de circulation (U) et sont disposés l'un derrière l'autre, transversalement par rapport à la trajectoire de circulation (62), jusqu'à une station d'évacuation (16) pour la saisie et l'évacuation des produits d'imprimerie (24) de l'installation de traitement (12), **caractérisé en ce que** les produits d'imprimerie (24) sont saisis à un bord latéral (26) au moyen de pinces de saisie (22) d'un convoyeur d'évacuation (18) de la station d'évacuation (16) dans une portion de la trajectoire de circulation (62) qui s'étend en un arc de cercle autour d'un axe de rotation (14) et sont enlevés des éléments de réception (32), dans lequel le nombre des pinces de saisie (22) entraînées de façon à circuler le long d'une trajectoire de déplacement (64) refermée sur elle-même opposée à la direction de circulation (U) et sont déplacées dans une portion de prise en charge (72) de la trajectoire de déplacement (64), qui s'étend en un arc de cercle autour d'un axe de prise en charge (68) parallèle à l'axe de rotation (14), dans les éléments de réception (32) de façon synchronisée avec ceux-ci et, après la saisie des produits d'imprimerie (24) à un bord latéral (26), en dehors des éléments de réception (32), dans lequel les produits d'imprimerie (24), qui sont tenus par les pinces de saisie (22), sont saisis à leur bord (30) opposé au bord latéral (26) par des pinces (28) d'un transporteur à pinces (20) de la station d'évacuation (16) et sont transportés plus loin après qu'ils ont été relâchés par les pinces de saisie (22), dans lequel le transporteur à pinces (20) est disposé, vu dans la direction de circulation (U), en aval du convoyeur d'évacuation (18) et les pinces commandées (28) sont entraînées le long d'une trajectoire de pinces (76) refermée sur elle-même dans la même direction que la direction de circulation (U).

17. Procédé selon la revendication 16, dans lequel des produits d'imprimerie (24) sont évacués de l'installation de traitement (12) au moyen du convoyeur d'évacuation (18) à la suite de la désactivation du transporteur à pinces (20).
